# EUROPEAN PATENT SPECIFICATION

(11) **EP 3 608 923 B1**
(45) Date of publication and mention of the grant of the patent: **14.04.2021**
(21) Application number: 18188494.1
(22) Date of filing: 10.08.2018
(51) Int. Cl.: H01B 13/16, H02K 15/12, H02K 3/30, H02G 5/00

(54) **APPARATUS AND METHOD FOR APPLYING AN INSULATION MATERIAL ONTO A CONDUCTOR**
VORRICHTUNG UND VERFAHREN ZUM AUFBRINGEN EINES ISOLATIONSMATERIALS AUF EINEN LEITER
APPAREIL ET PROCÉDÉ POUR APPLIQUER UN MATÉRIAU D'ISOLATION SUR UN CONDUCTEUR

(43) Date of publication of application: 12.02.2020
(73) Proprietor: ABB Schweiz AG, 5400 Baden (CH)
(72) Inventor: Leal-Ayala, Andres, 5408 Ennetbaden (CH); Ho, Chau-Hon, 79540 Lörrach (DE); Gautschi, Simon, 5408 Ennetbaden (CH); Rodriguez-Vilches, Seila, 8800 Thalwil (CH)
(74) Representative: Zimmermann & Partner Patentanwälte mbB

(56) References cited:
- EP-A2- 0 951 132
- WO-A1-97/11831
- WO-A1-97/43816
- WO-A1-2017/015512
- DE-A1- 2 720 270
- US-A- 4 109 375

## Description

### TECHNICAL FIELD

Embodiments of the present disclosure relate generally to an apparatus and a method for applying insulation material onto a conductor, such as a coil wire or a Roebel bar, to obtain an insulated conductor arrangement for an electrical appliance.

### BACKGROUND ART

Electrical conductors, such as coil wires or Roebel bars for a rotary electric machine such as a motor or a generator, have to be insulated on an outer surface thereof in order to avoid an electrical contact between single adjacent conductors, such as adjacent windings of a coil form-wound coil. The insulation also serves the purpose to avoid a short circuit between the conductor in the electric machine and other conductive components, e. g. the stator of the electric machine.

Currently, there are technologies known for insulating a conductor, e. g. of a form-wound coil or Roebel bars, in high-voltage electric machines. For example, in a conventional technology, a thermoset resin material is combined with a tape containing mica (a mica tape). In a so-called Resin Rich process (RR), a pre-impregnated resin rich mica tape is used. The resin is pre-polymerized. Then, the tape is wrapped around the conductor and consolidated in a hot-press. In a so-called Vacuum Pressure Impregnation process (VPI), a porous mica tape is first wrapped around the conductor; then, it is impregnated with a low viscous resin. Subsequently, the arrangement is heat-cured, and the resin solidifies. In the case of small machines (< 15 kV), complete stators with inserted conductors (form-wound coils) are fully impregnated in a global VPI process. For large machines, insulated Roebel bars are manufactured and impregnated individually in a single VPI process.

WO 97/43816 A1 discloses an electric conductor for a winding of a large machine. DE 27 20 270 A1 discloses to apply a coating with mica on a conductor. US 4 109 375 A discloses a coating device for electric cables. EP 0 951 132 A2 discloses to apply a coating mixed with mica by means of electrostatic spraying. WO 2017/015512 A1 discloses an outer coating that can be provided on an overhead conductor.

A combination of mica tape and resin impregnation has been in use for almost a century. Although robotic applications have been developed to automate the coil forming and insulation taping, performing a conductor insulation, in particular a stator coil insulation, is still a time-consuming process involving multiple steps.

The mica tapes have to be precisely positioned to avoid thickness variations in the form of tape gaps or overlapping tape parts. Moreover, the principle of mica tape impregnation bears the risk of void formation in the tape resin structure. Voids may lead to partial discharge problems, leading to a limitation of the design field.

Moreover, handling of liquid resins in the workshops - usually epoxy-anhydride and polyester resin systems - causes health and safety issues, as well as environmental issues, due to the evaporation of chemical fumes and gases from the large VPI tanks. Curing the impregnated parts is time consuming and energy consuming. For example, it may take several hours of heating in large ovens, while the chemical fumes have to be eliminated.

Thus, there is a desire for a simple means to obtain a properly insulated conductor arrangement for an electrical appliance.

### SUMMARY OF THE INVENTION

In view of the above, an apparatus according to claim 1, a method according to claim 7, and an electric machine part according to claim 15 are provided. Further aspects, advantages and features of the present disclosure are apparent from the dependent claims, the description, and the accompanying drawings.

According to an aspect, an apparatus for applying an insulation layer onto a conductor is provided. By applying the insulation layer, a conductor arrangement is obtained. The conductor arrangement is intended to be used in an electrical appliance, such as an electric machine, a transformer or the like. In embodiments, the electrical appliance is a rotary electric machine, and the conductor arrangement is used in a stator thereof.

In the aspect, the apparatus comprises a treatment device and an advancement device. The treatment device comprises at least a cleaning unit, an application unit and a curing unit. The advancement device is configured to perform a relative movement of the conductor with respect to the treatment device in an advancement direction.

Typically, the conductor is passed through the treatment device, either by moving the conductor or by moving the treatment device, along a longitudinal direction of the conductor which defines the advancement direction. The application unit of the treatment device is configured to apply a composition of a thermosetting material and solid electrically insulating elements onto the conductor while the conductor is moved relative to the treatment device.

As used herein, when the conductor is moved relative to the treatment device in the advancement direction, a part of the conductor in the longitudinal direction that has already been treated by the treatment device is referred to as an downstream part, and likewise, a part of the conductor in the longitudinal direction that still is to be treated by the treatment device is referred to as an upstream part.

The curing unit is arranged downstream of the application unit. The curing unit is configured to activate a curing process of the thermosetting material. After an appropriate curing, activated by the curing unit, the insulation layer on the conductor is obtained.

According to a further aspect, a method for applying an insulation layer onto a conductor to obtain a conductor arrangement for an electrical appliance is provided. The method comprises an application of a composition of thermosetting material and solid electrically insulating elements onto the conductor, and an activation of the applied thermosetting material in a curing process, to obtain the insulation layer on the conductor. The application and the activation in the method are performed continuously with respect to the longitudinal direction of the conductor, typically while the conductor is moved along a treatment device in an advancement direction.

The conductor arrangement obtainable by using an apparatus or a method as described herein offers an advantageous alternative to tape based mica-resin insulations. For example, an intermediate processing step such as taping is avoided. According the technology described herein, the insulation medium is directly dispersed in the thermosetting material compounds which are applied onto the conductors (e. g., enameled multi-turn coils) in an automated manner, eliminating the need to use mica tapes. The obtained insulation layer may serve both as a turn insulation and a groundwall insulation, e. g. in a form-wound coil.

By eliminating mica tapes, the technology described in the present disclosure may help to decrease the number of interfaces that are present in the winding e. g. of a form-wound coil, which contributes to decreasing the number of potentially weak spots within the coil that may fail during operation, e. g. due to vibrations or the like.

### BRIEF DESCRIPTION OF THE DRAWINGS

Embodiments of the subject-matter of the present application will be described in more detail below with reference to the drawings, in which:
Fig. 1 is a schematic sectional view of a conductor arrangement obtainable through the technology according to embodiments described herein;
Fig. 2 is an enlarged schematic sectional view of a detail of the conductor arrangement of Fig. 1;
Fig. 3 is a schematic perspective view illustrating an apparatus according to an embodiment;
Fig. 4 is a schematic side view illustrating an apparatus according to another embodiment;
Fig. 5 is a schematic sectional front view of the apparatus of Fig. 4; and
Fig. 6 is a flow chart of a method according to an embodiment.

### DESCRIPTION OF EMBODIMENTS

In the following, embodiments of the present application are described with reference to the drawings. In the drawings, like parts are provided with the same reference numerals, and their respective descriptions may be abbreviated or omitted as appropriate.

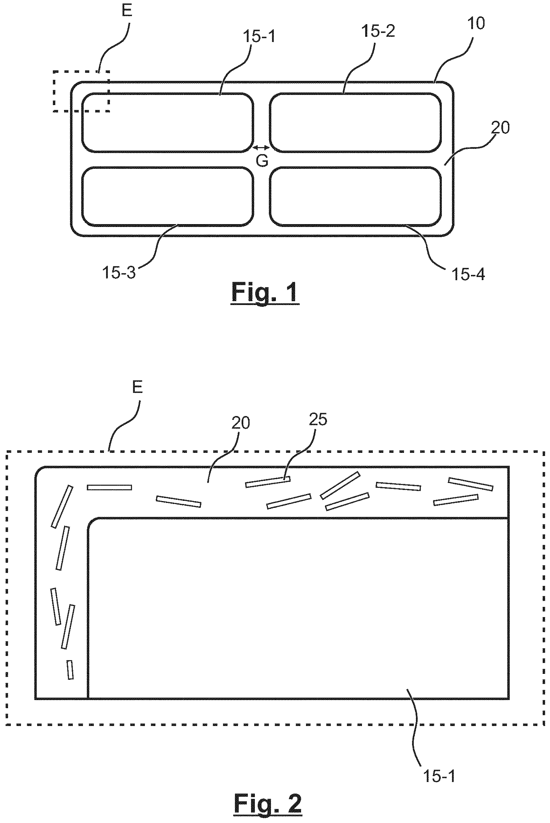

Fig. 1 is a schematic sectional view of a conductor arrangement 10. The conductor arrangement 10 is obtained or obtainable through a method according to an embodiment as described herein, preferably by performing a method by means of an apparatus according to an embodiment as described herein. Fig. 2 shows, in an enlarged view, a part E of the conductor arrangement 10 of Fig. 1. Figs. 1 and 2 are described in common.

In Fig. 1, the conductor arrangement 10 comprises spatially adjacent conductors 15-1, 15-2, 15-3, 15-4, each having a substantially rectangular cross-section with rounded corners. However, neither the cross-sectional shape, nor the number of conductors 15-1, 15-2, 15-3, 15-4 is limited to those shown in the drawings.

For example, only one conductor may be provided to be insulated by an apparatus or method according to an embodiment, or two, three, five or more conductors are provided in a conductor arrangement. Still for example, one or more of the conductors may have different cross-sectional shapes, such as square, square with rounded corners, rectangular etc. In the example of Figs. 1 and 2, each of the conductors 15-1, 15-2, 15-3, 15-4 are enameled conductors, but not limited thereto.

In Figs. 1 and 2, the conductors 15-1, 15-2, 15-3, 15-4 each have outer surfaces that are arranged at a distance of a gap G with respect to the respective neighboring conductors 15-1, 15-2, 15-3, 15-4. The gap G distance may be provided intentionally or non-intentionally, and it may be as small as only a few millimeters or even less than one millimeter. An insulation layer 20 is present on the conductor arrangement and in the gap G.

The insulation layer 20 comprises an insulation material obtained through a curing process of a thermosetting material to be described later, wherein solid electrically insulating elements 25, such as mica platelets, are present inside the thermoset material. Preferably, the relationship of the solid insulating elements to the thermosetting material component of the insulation material is between 20:80, preferably between 25:75 and typically about 30:70 by volume in the uncured state.

The term composition, as used herein, generally refers to a mixture or a compound of the materials that are involved. Particularly, a composition of a thermosetting material and mica elements may be obtained by mixing the uncured thermosetting material and the insulating elements in an appropriate manner. For example, the thermosetting material and mica platelets are fed, typically gravimetrically fed, into a mixer that produces the composition. The composition may generally be a mica-filled liquid resin compound. The thermosetting material may be an UV-curable thermosetting resin. The insulating elements may be mica particles, typically mica platelets, having a predetermined average particle size. The insulation material, or the thermosetting material component thereof, is typically cured according to need.

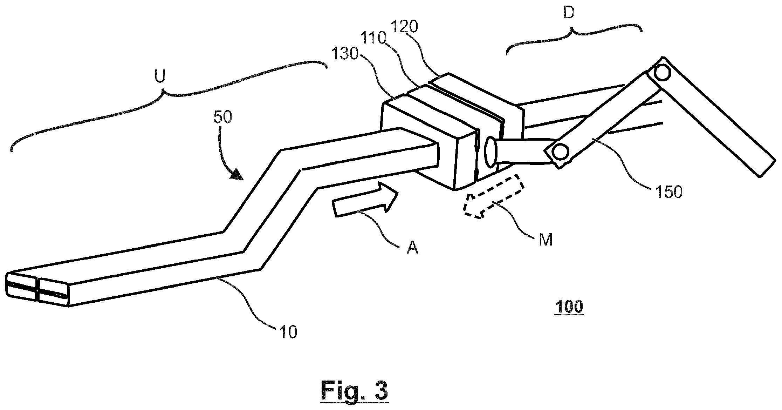

Fig. 3 shows a schematic perspective view illustrating an apparatus 100 according to an embodiment. The apparatus 100 is used for applying the insulation layer 10 onto the conductor 15-1, 15-2, 15-3, 15-4 to obtain a conductor arrangement 10, for example the conductor arrangement 10 shown in Figs. 1 and 2. The conductor arrangement 10 can be used as a part of an electric machine.

For example, the electric machine part may be, but not limited to, a stator of a rotary electric machine. An electric machine is typically a rotary electric machine, and the conductor arrangement 10 is preferably used in a rotor or in a stator of the rotary electrical machine. The apparatus 100 may be used to conduct or perform a method for applying the insulation layer 10 onto the conductor 15-1, 15-2, 15-3, 15-4 as described herein, to obtain the conductor arrangement 10.

In Fig. 3, an application unit 110, a curing unit 120 and a cleaning unit 130 form a treatment device. In other embodiments, the cleaning unit 130 may be omitted, and the treatment device may be formed of only the application unit 110 and the curing unit 120. The application unit 110, the curing unit 120, and, if provided, the cleaning unit 130 are arranged such as to be spatially adjacent to one another, i. e. neighboring each other. Preferably, the application unit 110, the curing unit 120, and, if provided, the cleaning unit 130 form a common unit.

The conductor 15-1, 15-2, 15-3, 15-4 is passed through the treatment device 110, 120, 130 in order to obtain the insulation layer 20 on the conductor 15-1, 15-2, 15-3, 15-4, as described later. In the embodiment shown in Fig. 3, a relative movement of the treatment device 110, 120, 130 with respect to the conductor 15-1, 15-2, 15-3, 15-4 is achieved by moving the treatment device 110, 120, 130, while the conductor 15-1, 15-2, 15-3, 15-4 is held stationary or fixed. The treatment device 110, 120, 130 is mounted, e. g. hinged, on an automatically moving robotic unit 150, whereof a robotic arm is shown in Fig. 3. In Fig. 3, the automatically moving robotic unit 150 forms an advancement device, or treatment device moving unit, for performing the relative movement of the conductor 15-1, 15-2, 15-3, 15-4 with respect to the treatment device.

The automatically moving robotic unit 150 is moved along the conductor 15-1, 15-2, 15-3, 15-4 in the movement direction M indicated with a dashed arrow in Fig. 3. Thereby, with the conductor 15-1, 15-2, 15-3, 15-4 being held fixed, the conductor 15-1, 15-2, 15-3, 15-4 can be regarded as being advanced (relatively spoken) in the advancement direction A shown with a solid-line arrow A in Fig. 3. With the automatically moving robotic unit 150 of Fig. 3 forming the advancement device, a complex-shaped conductor 15-1, 15-2, 15-3, 15-4 can be provided with the insulation layer 20. An example of a complex-shaped conductor is the conductor 15-1, 15-2, 15-3, 15-4 of Fig. 3 that does not extend entirely straight in the longitudinal direction, but comprises a bend 50 where its longitudinal elongation deviates from a straight line. The treatment device 110, 120, 130 is guided along the bended 50 part of the conductor 15-1, 15-2, 15-3, 15-4 by means of the automatically moving robotic unit 150.

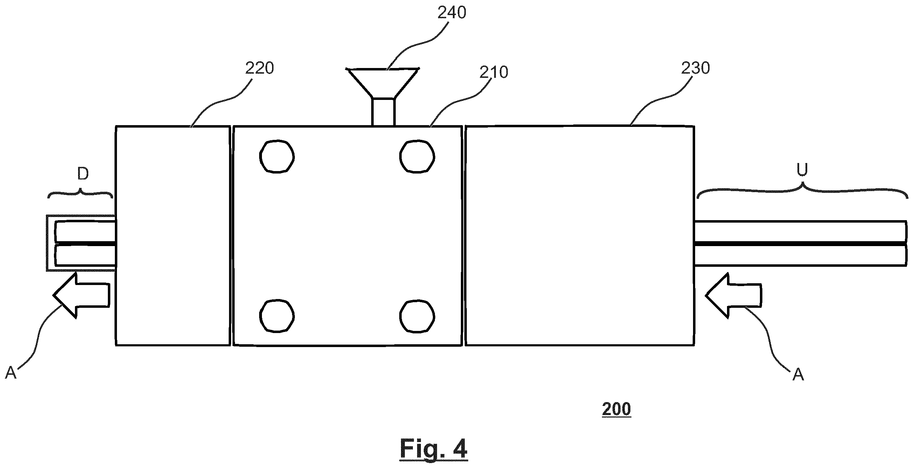

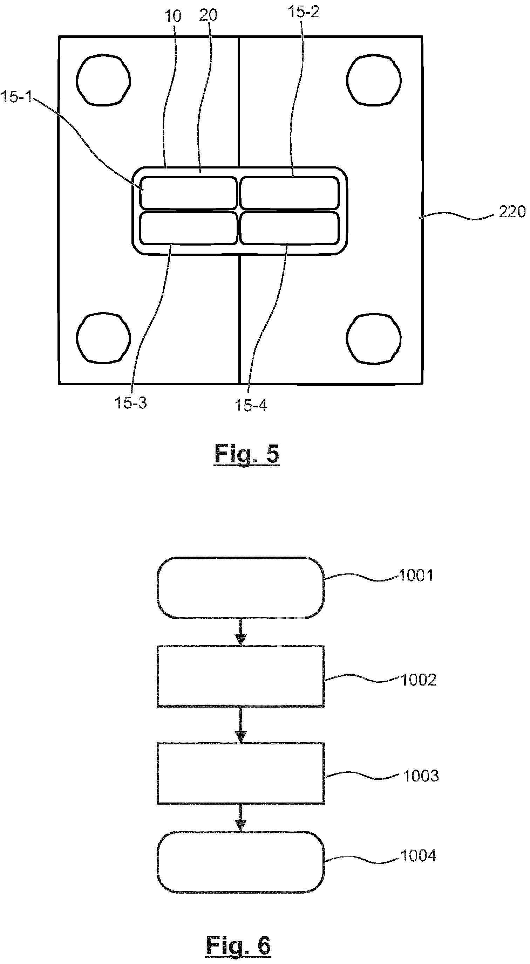

Figs. 4 and 5 show a schematic side view and a schematic front view, respectively, of an apparatus 200 according to another embodiment. In Figs. 4 and 5, the conductor 15-1, 15-2, 15-3, 15-4 is passed through the apparatus 200 in the advancement direction, indicated by a solid-line arrow A, where the apparatus 200 itself is stationary, i. e. fixed. For example, the conductor 15-1, 15-2, 15-3, 15-4 is advanced by a guidance roller or feeding roller (not shown) arranged inside the apparatus and driven by an appropriate drive, such as a motor. In the apparatus 200 of Figs. 4 and 5, such an advancing means forms a conductor feeding unit that is adapted to move the conductor 15-1, 15-2, 15-3, 15-4 in its longitudinal direction along the treatment unit.

The treatment unit in the apparatus 200, again, comprises an application unit 210, a curing unit 220, and a cleaning unit 230, wherein the cleaning unit is optional and may be omitted. In addition, in Fig. 4, a composition material feeder 240 is shown for feeding the composition material to the application unit 210.

In both embodiments, the respective curing unit 120, 220 is arranged downstream of the corresponding application unit 110, 210. When the conductor 15-1, 15-2, 15-3, 15-4 is moved in the advancement direction A, those regions of the conductor 15-1, 15-2, 15-3, 15-4 in its longitudinal direction that have already been treated, i. e. at least passed the application unit 110, 210, are referred to as being a downstream region D, and likewise, a those regions of the conductor 15-1, 15-2, 15-3, 15-4 in its longitudinal direction that still have to be treated are referred to as an upstream region U.

When the conductor 15-1, 15-2, 15-3, 15-4 is passed through the respective treatment unit 110, 120, 130 or 210, 220, 230, either by holding the conductor 15-1, 15-2, 15-3, 15-4 stationary and moving the treatment unit 110, 120, 130 or by holding the treatment unit 210, 220, 230 stationary and moving the conductor 15-1, 15-2, 15-3, 15-4, the application unit 110, 210, or jacketing unit, applies the composition of the thermosetting material and the solid electrically insulating elements onto at least parts of the conductor 15-1, 15-2, 15-3, 15-4, typically onto at least parts of the outer surface of the conductor 15-1, 15-2, 15-3, 15-4.

The composition material, e. g. a compounded resin having mica platelets mixed therein, is typically fed to the application unit 110, 210 via a metering pump (not shown). In Fig. 3, the application unit 110, applies a layer of the composition material onto the complex-shaped conductor 15-1, 15-2, 15-3, 15-4 which is held stationary by a static clamping system.

A thickness of the composition material layer applied via the application unit 110 is controllable by means of the composition throughput, measured via the metering pump, and a translational speed of the application unit 110 via the automatically moving robotic unit 150. Afterwards, the curing unit 120 activates the curing, i. e. the crosslinking of the thermoset material, as described in more detail below.

In Figs. 4 and 5, the composition material is poured into the composition material feeder 240, e. g. conical hopper, which feeds the stationary application unit 210. The conductor 15-1, 15-2, 15-3, 15-4 to be provided with the insulation layer 20 enters the application unit 210, while the segment of freshly applied or freshly jacketed conductor 15-1, 15-2, 15-3, 15-4 enters the curing unit 220, in which the curing is activated, i. e. the crosslinking of the thermoset material is activated, as described in more detail below.

The curing unit 120, 220 activates a curing process of the thermosetting material that has already been applied onto the conductor 15-1, 15-2, 15-3, 15-4. The curing process, or crosslinking process, of the thermosetting material is activated right after having been applied by means of the application unit 110, 120.

Thus, the curing unit 120, 220 is configured such as to activate the curing process for the thermosetting material. When for example the thermosetting material is UV curable, the curing unit 120, 220 includes at least one UV light source having a sufficient intensity to activate the curing process when the conductor 15-1, 15-2, 15-3, 15-4 onto which the thermosetting material has been applied is passed through the curing unit 120, 220. It is noted that the curing process need not necessarily be terminated in a part of the conductor 15-1, 15-2, 15-3, 15-4 that leaves the curing unit 120, 220. For example, it is conceivable that the thermosetting material is cured to a degree of less than 100%, e. g. 90% or 80%, when leaving the curing unit.

The thermosetting material preferably has a viscosity low enough to penetrate into the gap G between adjacent conductor parts 15-1, 15-2, 15-3, 15-4. Preferably, the thermosetting material is a free-flowing material at the temperature of application, e. g. at room temperature. Typically, in addition, the characteristics of the thermosetting material are such that it adheres on the surfaces, as well in the gap G, in a sufficient manner until cured by activation of the curing unit 120, 220, as described in the following.

The curing unit 120, 220 is arranged downstream of the application unit 110. For example, the thermosetting material is UV-curable, and the curing unit 120, 220 irradiates the UV-curable thermosetting material that has been applied onto the conductor 15-1, 15-2, 15-3, 15-4 with UV light, thus initiating the curing.

However, the thermosetting material is not limited to a UV-curable material, and the thermosetting material may as well be, for example, a heat-curable material. In this case, the curing unit 120, 220 heats the heat-curable thermosetting material, thereby initiating the curing. As stated above, the curing process of the thermosetting material by means of the curing unit 120, 220 need not necessarily be finished when the treated conductor 15-1, 15-2, 15-3, 15-4 parts leave the treatment device 110, 120, 130 or 210, 220, 230.

Fig. 5 shows a schematic front view of the apparatus 200 of Fig. 4, when viewed from the downstream direction D towards the upstream direction U in Fig. 4. The treated conductor 15-1, 15-2, 15-3, 15-4 parts leave the curing unit 220 as the conductor arrangement 10 having the insulation layer 20 applied thereon.

The conductor arrangement 10 that is obtained comprises the conductor 15-1, 15-2, 15-3, 15-4 including an electrically conductive material having an electrical conductivity value, such as copper or enameled copper. The insulation layer 20 obtained on the conductor arrangement is at least partially provided around the conductor 15-1, 15-2, 15-3, 15-4 with a cured insulation material as described herein. As used herein, the term "at least partially provided around the conductor" may be understood in a way that the conductor may be surrounded by the insulation layer 20 at least partially, e. g. not over the whole length of the conductor. In embodiments, where the insulation layer is at least partially provided around the conductor, at least 60% of the surface (the outer surface) of the conductor is covered by the insulation layer, typically at least 70%, more typically at least 80%. In some embodiments, the insulation layer that is partially provided around the conductor surrounds the conductor approximately 360° over the entire length where the insulation layer is provided.

In both of the embodiments of Figs. 3, 4, and 5, the composition is applied substantially continuously onto the conductor 15-1, 15-2, 15-3, 15-4. Preferably, also the advancement in the advancement direction A is continuous. Thereby, a continuous insulation layer 20 of relatively homogenous thickness can be obtained on the conductor 15-1, 15-2, 15-3, 15-4. Preferably, the continuous insulation layer 20 surrounds the conductor approximately 360° around a longitudinal axis of the conductor 15-1, 15-2, 15-3, 15-4. Continuously advancing is typically achieved by moving the conductor 15-1, 15-2, 15-3, 15-4 relative to the treatment device 110, 120, 130 at a substantially constant speed.

In both of the embodiments of Figs. 3, 4, and 5, a respective cleaning unit 130, 230 is provided to be part of the treatment device. The cleaning unit includes automatic cleaning means, such as mechanical/abrasive and/or chemical cleaning means, configured to clean the outer surface(s) of any or each conductor 15-1, 15-2, 15-3, 15-4, thus preparing the application and curing of the composition. By cleaning the outer surface(s), an improved adhesion strength of the composition may be achieved, and voids or other irregularities in the insulation layer 20 of the conductor arrangement 10 may be further suppressed or eliminated. Preferably, as with the application and the curing, also the cleaning via the respective cleaning unit 130, 230 is carried out substantially continuously in the longitudinal direction of the conductor.

The cleaning unit 130, 230, in addition to cleaning, initiates or performs a surface activation function in which the chemical reactivity of the surface is enhanced by depositing chemical functional groups on the surface which will readily react with the thermosetting material, improving the conductor-resin adhesion. The chemical functional groups may be produced for instance by means of a plasma.

Fig. 6 shows a flow chart of a method according to an embodiment, the method preferably carried out using an apparatus 100 of Fig. 3 or an apparatus 200 of Figs. 4 and 5, as described herein.

In Fig. 6, the process is started in 1001. In 1002, a composition of a thermosetting material and solid electrically insulating elements, as described herein, is applied continuously in a longitudinal direction of the conductor 15-1, 15-2, 15-3, 15-4. In 1003, the curing process of the applied thermosetting material is activated continuously in the longitudinal direction, whereupon the insulation layer 20 is obtained on the conductor 15-1, 15-2, 15-3, 15-4. The process ends in 1004. In a further embodiment, not shown, the method may additionally comprise a cleaning of an outer surface of the conductor 15-1, 15-2, 15-3, 15-4 continuously in the longitudinal direction. The cleaning, e. g. mechanical/abrasive and/or chemical cleaning, is typically carried out prior to applying 1002 and curing 1003.

Features relating to the apparatus and/or the method are described. The conductor 15-1, 15-2, 15-3, 15-4 typically is a coil wire, a Roebel bar, a stator winding, or a combination thereof.

Preferably, the conductor is enameled. For example, an enameled conductor is an enameled stator winding.

The conductor arrangement 10 obtained via the herein-described technology is intended to be used in an electrical appliance. For example, the conductor arrangement 10 is configured to be used in an electrical motor, a generator, or a transformer. Preferably, the conductor arrangement 10 is configured to be used in a stator of a rotary electric machine, such as a stator of an electrical motor or a stator of an electrical generator.

In a test arrangement, a coil comprising 11 enameled rectangular copper wires serving as the conductors 15-1, 15-2, 15-3, 15-4 were transported at a constant speed through a treatment device having an application unit and a curing unit, as described herein. The conductors 15-1, 15-2, 15-3, 15-4 were jacketed, by the application unit, with a two-component Silopren UV Electro liquid silicone rubber having mica platelets mixed therein at room temperature. A metering and mixing system supplied a constant amount of liquid silicone to the application unit. The crosslinking of the applied jacketing was subsequently activated with the curing unit, and a conductor arrangement was obtained. The conductor arrangement showed an insulation layer of substantially homogeneous thickness and virtually no voids, even in the gaps between respective adjacent ones of the conductors 15-1, 15-2, 15-3, 15-4.

Although the present disclosure has been described on the basis of some embodiments, a person skilled in the art will appreciate that these embodiments are not intended to be limiting the scope of the present disclosure that is defined by the claims in any way. Without departing from the concept of the present invention, any variations and modifications to the embodiments should be within the apprehension of those with ordinary knowledge and skill in the art, and therefore fall in the scope of the present invention which is defined by the claims.

## Claims

1. An apparatus (100, 200) for applying an insulation layer (20) onto a conductor (15-1, 15-2, 15-3, 15-4) to obtain a conductor arrangement (10) for an electrical appliance, the apparatus comprising:
a treatment device (110, 120, 130; 210, 220, 230) having at least an application unit (110, 210) and a curing unit (120, 220), the curing unit (120, 220) being arranged downstream of the application unit (110, 210); wherein
the treatment device (110, 120, 130; 210, 220, 230) further comprises a cleaning unit (130, 230) arranged upstream of the application unit (110, 210), the cleaning unit (130, 230) configured to clean an outer surface of the conductor (15-1, 15-2, 15-3, 15-4) and wherein
the cleaning unit (130, 230) is adapted to initiate or perform a surface activation function in which a chemical reactivity of the surface is enhanced by depositing chemical functional groups on the surface;
an advancement device (150) configured to perform a relative movement of the conductor (15-1, 15-2, 15-3, 15-4) with respect to the treatment device (110, 120, 130; 210, 220, 230) in an advancement direction (A),
wherein the application unit (110, 210) is configured to apply a composition of the thermosetting material and solid electrically insulating elements, preferably mica platelets, onto the conductor (15-1, 15-2, 15-3, 15-4), and
wherein the curing unit (120, 220) is configured to activate a curing process of the thermosetting material to obtain the insulation layer (20) on the conductor (15-1, 15-2, 15-3, 15-4).

2. The apparatus (100, 200) of claim 1, wherein the application unit (110, 210) is configured to apply the composition substantially continuously; and/or wherein the curing unit (120, 220) is configured to activate the curing process substantially continuously.

3. The apparatus of claim 1, wherein the chemical functional groups are produced by means of a plasma.

4. The apparatus (100, 200) of any one the preceding claims, wherein the application unit (110, 210) and the curing unit (120, 220) are arranged spatially adjacent to one another, preferably in a common unit, and wherein also the cleaning unit (130, 230) is provided spatially adjacent to the application unit (110, 210), preferably in the common unit.

5. The apparatus (100) of any one of claims 1 to 4, wherein the advancement device (150) comprises a treatment device moving unit, preferably an automatically moving robotic unit, configured to move the treatment device along the longitudinal direction of the conductor (15-1, 15-2, 15-3, 15-4), the conductor being held fixed.

6. The apparatus (200) of any one of claims 1 to 4, wherein the advancement device comprises a conductor feeding unit configured to move the conductor (15-1, 15-2, 15-3, 15-4) in its longitudinal direction along the treatment device, the treatment device being held fixed.

7. A method for applying an insulation layer onto a conductor (15-1, 15-2, 15-3, 15-4) using the apparatus of any one of claims 1 to 6 to obtain a conductor arrangement (10) for an electrical appliance, the method comprising:
Cleaning continuously in the longitudinal direction an outer surface of the conductor (15-1, 15-2, 15-3, 15-4) with a cleaning unit (130, 230), wherein
the cleaning unit (130, 230) is adapted to initiate or perform a surface activation function in which a chemical reactivity of the surface is enhanced by depositing chemical functional groups on the surface;
Applying continuously in a longitudinal direction of the conductor (15-1, 15-2, 15-3, 15-4) a composition of the thermosetting material and solid electrically insulating elements, preferably mica platelets, onto the conductor, and
Activating continuously in the longitudinal direction a curing process of the applied thermosetting material to obtain the insulation layer (20) on the conductor (15-1, 15-2, 15-3, 15-4).

8. The method of claim 7, wherein the chemical functional groups are produced by means of a plasma.

9. The apparatus (100, 200) of any one of claims 1-6 or the method of any one of claims 7-8, wherein the conductor (15-1, 15-2, 15-3, 15-4) comprises multiple conductor parts each having an outer surface, the multiple conductor parts being arranged adjacent to one another in a longitudinal direction whereby a gap (G) is formed between each of the adjacent ones of the outer surfaces, wherein the insulation layer is additionally obtained in the gap (G).

10. The apparatus (100, 200) of any one of claims 1-6 or 9 or the method of any one of claims 7-8 or 9, wherein the solid electrically insulating elements are mica platelets, wherein the relationship of the mica platelets to the thermosetting material component of the insulation material is between 20:80, preferably between 25:75 and typically about 30:70 by volume in the uncured state.

11. The apparatus (100, 200) of any one of claims 1-6 or 9-10 or the method of any one of claims 7-8 or 9-10, wherein the conductor (15-1, 15-2, 15-3, 15-4) is any of a coil wire, a Roebel bar, a stator winding, or a combination thereof.

12. The apparatus (100, 200) of any one of claims 1-6 or 9-11 or the method of any one of claims 7-8 or 9-11, wherein the conductor (15-1, 15-2, 15-3, 15-4) is an enameled conductor.

13. The apparatus (100, 200) of any one of claims 1-6 or 9-12 or the method of any one of claims 7-8 or 9-12, wherein the conductor arrangement (10) is configured to be used in an electrical motor, a generator, or a transformer.

14. The apparatus (100, 200) of any one of claims 1-6 or 9-13 or the method of any one of claims 7-8 or 9-13, wherein the thermosetting material is low-viscosity material.

15. An electric machine part, in particular a stator of an electric machine, having a conductor arrangement (10) obtained by means of the apparatus of any one of claims 1-6 or 9-14 or obtainable by means of the method of any one of claim 7-8 or 9-14.

## Patentansprüche

1. Vorrichtung (100, 200) zum Aufbringen einer Isolationsschicht (20) auf einem Leiter (15-1, 15-2, 15-3, 15-4), um eine Leiteranordnung (10) für ein elektrisches Gerät zu erhalten, die Vorrichtung Folgendes umfassend:
eine Behandlungsvorrichtung (110, 120, 130; 210, 220, 230) mit mindestens einer Aufbringeinheit (110, 210) und einer Härtungseinheit (120, 220), wobei die Härtungseinheit (120, 220) stromabwärtig von der Aufbringeinheit (110, 210) angeordnet ist; wobei
die Behandlungsvorrichtung (110, 120, 130; 210, 220, 230) weiterhin eine Reinigungseinheit (130, 230) umfasst, die stromaufwärtig von der Aufbringeinheit (110, 210) angeordnet ist, wobei die Reinigungseinheit (130, 230) eingerichtet ist, um eine Außenfläche des Leiters (15-1, 15-2, 15-3, 15-4) zu reinigen, und wobei die Reinigungseinheit (130, 230) eingerichtet ist, um eine Oberflächenaktivierungsfunktion einzuleiten oder durchzuführen, bei der eine chemische Reaktivität der Oberfläche durch Abscheiden funktionaler chemischer Gruppen auf der Oberfläche verbessert wird;
eine Vorschubvorrichtung (150), die eingerichtet ist, um eine relative Bewegung des Leiters (15-1, 15-2, 15-3, 15-4) hinsichtlich der Behandlungsvorrichtung (110, 120, 130; 210, 220, 230) in einer Vorschubrichtung (A) durchzuführen,
wobei die Aufbringeinheit (110, 210) eingerichtet ist, um eine Zusammensetzung des wärmeaushärtenden Materials und fester elektrisch isolierender Elemente, vorzugsweise Glimmerplättchen, auf dem Leiter (15-1, 15-2, 15-3, 15-4) aufzubringen, und
wobei die Härtungseinheit (120, 220) eingerichtet ist, um einen Härtungsprozess des wärmeaushärtenden Materials zu aktivieren, um die Isolationsschicht (20) auf dem Leiter (15-1, 15-2, 15-3, 15-4) zu erhalten.

2. Vorrichtung (100, 200) nach Anspruch 1, wobei die Aufbringeinheit (110, 210) eingerichtet ist, um die Zusammensetzung im Wesentlichen kontinuierlich aufzubringen; und/oder wobei die Härtungseinheit (120, 220) eingerichtet ist, um den Härtungsprozess im Wesentlichen kontinuierlich zu aktivieren.

3. Vorrichtung nach Anspruch 1, wobei die funktionalen chemischen Gruppen mittels eines Plasmas hergestellt werden.

4. Vorrichtung (100, 200) nach einem die vorhergehenden Ansprüche, wobei die Aufbringeinheit (110, 210) und die Härtungseinheit (120, 220) räumlich benachbart zueinander, vorzugsweise in einer gemeinsamen Einheit, angeordnet sind und wobei auch die Reinigungseinheit (130, 230) räumlich angrenzend an der Aufbringeinheit (110, 210), vorzugsweise in der gemeinsamen Einheit, bereitgestellt ist.

5. Vorrichtung (100) nach einem der Ansprüche 1 bis 4, wobei die Vorschubvorrichtung (150) eine Behandlungsvorrichtungs-Bewegungseinheit, vorzugsweise eine sich automatisch bewegende Robotereinheit, umfasst, die eingerichtet ist, um die Behandlungsvorrichtung entlang der Längsrichtung des Leiters (15-1, 15-2, 15-3, 15-4) zu bewegen, wobei der Leiter festgehalten wird.

6. Vorrichtung (200) nach einem der Ansprüche 1 bis 4, wobei die Vorschubvorrichtung eine Leiterzuführeinheit umfasst, die eingerichtet ist, um den Leiter (15-1, 15-2, 15-3, 15-4) in seine Längsrichtung entlang der Behandlungsvorrichtung zu bewegen, wobei die Behandlungsvorrichtung festgehalten wird.

7. Verfahren zum Aufbringen einer Isolationsschicht auf einem Leiter (15-1, 15-2, 15-3, 15-4) unter Verwendung der Vorrichtung nach einem der Ansprüche 1 bis 6, um eine Leiteranordnung (10) für ein elektrisches Gerät zu erhalten, das Verfahren Folgendes umfassend:
kontinuierliches Reinigen in der Längsrichtung einer Außenfläche des Leiters (15-1, 15-2, 15-3, 15-4) mit einer Reinigungseinheit (130, 230), wobei die Reinigungseinheit (130, 230) eingerichtet ist, um eine Oberflächenaktivierungsfunktion einzuleiten oder durchzuführen, bei der eine chemische Reaktivität der Oberfläche durch Abscheiden funktionaler chemischer Gruppen auf der Oberfläche verbessert wird;
kontinuierliches Aufbringen in einer Längsrichtung des Leiters (15-1, 15-2, 15-3, 15-4) einer Zusammensetzung des wärmeaushärtenden Materials und fester elektrisch isolierender Elemente, vorzugsweise Glimmerplättchen, auf dem Leiter, und
kontinuierliches Aktivieren in der Längsrichtung eines Härtungsprozesses des aufgebrachten wärmeaushärtenden Materials, um die Isolationsschicht (20) auf dem Leiter (15-1, 15-2, 15-3, 15-4) zu erhalten.

8. Verfahren nach Anspruch 7, wobei die funktionalen chemischen Gruppen mittels eines Plasmas hergestellt werden.

9. Vorrichtung (100, 200) nach einem der Ansprüche 1 bis 6 oder Verfahren nach einem der Ansprüche 7 bis 8, wobei der Leiter (15-1, 15-2, 15-3, 15-4) mehrere Leiterteile umfasst, die jeweils eine Außenfläche aufweisen, wobei die mehreren Leiterteile einander benachbart in einer Längsrichtung angeordnet sind, wodurch eine Lücke (G) zwischen jeder benachbarten der Außenflächen ausgebildet wird, wobei die Isolationsschicht zusätzlich in der Lücke (G) erhalten wird.

10. Vorrichtung (100, 200) nach einem der Ansprüche 1 bis 6 oder 9 oder Verfahren nach einem der Ansprüche 7 bis 8 oder 9, wobei die festen elektrisch isolierenden Elemente Glimmerplättchen sind, wobei das Verhältnis der Glimmerplättchen zu der wärmeaushärtenden Materialkomponente des Isolationsmaterials zwischen 20:80, vorzugsweise zwischen 25:75 und typischerweise ungefähr 30:70 auf das Volumen in dem nicht ausgehärteten Zustand bezogen beträgt.

11. Vorrichtung (100, 200) nach einem der Ansprüche 1 bis 6 oder 9 bis 10 oder Verfahren nach einem der Ansprüche 7 bis 8 oder 9 bis 10, wobei der Leiter (15-1, 15-2, 15-3, 15-4) ein Spulendraht, ein Röbelstab, eine Statorwicklung oder eine Kombination davon ist.

12. Vorrichtung (100, 200) nach einem der Ansprüche 1 bis 6 oder 9 bis 11 oder Verfahren nach einem der Ansprüche 7 bis 8 oder 9 bis 11, wobei der Leiter (15-1, 15-2, 15-3, 15-4) ein lackierter Leiter ist.

13. Vorrichtung (100, 200) nach einem der Ansprüche 1 bis 6 oder 9 bis 12 oder Verfahren nach einem der Ansprüche 7 bis 8 oder 9 bis 12, wobei die Leiteranordnung (10) eingerichtet ist, um in einem elektrischen Motor, einem Generator oder einem Transformator verwendet zu werden.

14. Vorrichtung (100, 200) nach einem der Ansprüche 1 bis 6 oder 9 bis 13 oder Verfahren nach einem der Ansprüche 7 bis 8 oder 9 bis 13, wobei das wärmeaushärtende Material ein Material mit geringer Viskosität ist.

15. Elektrisches Maschinenteil, insbesondere ein Stator einer elektrischen Maschine, mit einer Leiteranordnung (10), die mittels der Vorrichtung nach einem der Ansprüche 1 bis 6 oder 9 bis 14 erhalten wird oder mittels des Verfahrens nach einem der Ansprüche 7 bis 8 oder 9 bis 14 erhältlich ist.

## Revendications

1. Appareil (100, 200) destiné à appliquer une couche d'isolation (20) sur un conducteur (15-1, 15-2, 15-3, 15-4) pour obtenir un agencement de conducteur (10) pour un appareillage électrique, l'appareil comprenant :
un dispositif de traitement (110, 120, 130 ; 210, 220, 230) ayant au moins une unité d'application (110, 210) et une unité de durcissement (120, 220), l'unité de durcissement (120, 220) étant disposée en aval de l'unité d'application (110, 210) ; dans lequel
le dispositif de traitement (110, 120, 130 ; 210, 220, 230) comprend en outre une unité de nettoyage (130, 230) disposée en amont de l'unité d'application (110, 210), l'unité de nettoyage (130, 230) étant configurée pour nettoyer une surface externe du conducteur (15-1, 15-2, 15-3, 15-4), et dans lequel
l'unité de nettoyage (130, 230) est adaptée pour initier ou effectuer une fonction d'activation de surface dans laquelle une réactivité chimique de la surface est accrue par dépôt de groupes chimiques fonctionnels sur la surface ;
un dispositif d'avance (150) configuré pour effectuer un déplacement relatif du conducteur (15-1, 15-2, 15-3, 15-4) par rapport au dispositif de traitement (110, 120, 130 ; 210, 220, 230) dans une direction d'avance (A), dans lequel l'unité d'application (110, 210) est configurée pour appliquer une composition du matériau thermodurcissable et d'éléments électriquement isolants solides, de préférence des plaquettes de mica, sur le conducteur (15-1, 15-2, 15-3, 15-4), et
dans lequel l'unité de durcissement (120, 220) est configurée pour activer un processus de durcissement du matériau thermodurcissable pour obtenir la couche d'isolation (20) sur le conducteur (15-1, 15-2, 15-3, 15-4) .

2. Appareil (100, 200) de la revendication 1, dans lequel l'unité d'application (110, 210) est configurée pour appliquer la composition de façon sensiblement continue ; et/ou dans lequel l'unité de durcissement (120, 220) est configurée pour activer le processus de durcissement de façon sensiblement continue.

3. Appareil de la revendication 1, dans lequel les groupes chimiques fonctionnels sont produits au moyen d'un plasma.

4. Appareil (100, 200) de l'une quelconque des revendications précédentes, dans lequel l'unité d'application (110, 210) et l'unité de durcissement (120, 220) sont disposées spatialement au voisinage l'une de l'autre, de préférence dans une unité commune, et dans lequel l'unité de nettoyage (130, 230) est également disposée spatialement au voisinage de l'unité d'application (110, 210), de préférence dans l'unité commune.

5. Appareil (100) de l'une quelconque des revendications 1 à 4, dans lequel le dispositif d'avance (150) comprend une unité de déplacement de dispositif de traitement, de préférence une unité robotique se déplaçant automatiquement, configurée pour déplacer le dispositif de traitement le long de la direction longitudinale du conducteur (15-1, 15-2, 15-3, 15-4), le conducteur étant maintenu fixe.

6. Appareil (200) de l'une quelconque des revendications 1 à 4, dans lequel le dispositif d'avance comprend une unité d'avance de conducteur configurée pour déplacer le conducteur (15-1, 15-2, 15-3, 15-4) dans sa direction longitudinale le long du dispositif de traitement, le dispositif de traitement étant maintenu fixe.

7. Procédé d'application d'une couche d'isolation sur un conducteur (15-1, 15-2, 15-3, 15-4) au moyen de l'appareil de l'une quelconque des revendications 1 à 6 pour obtenir un agencement de conducteur (10) pour un appareillage électrique, le procédé comprenant :
le nettoyage continu, dans la direction longitudinale, d'une surface externe du conducteur (15-1, 15-2, 15-3, 15-4) avec une unité de nettoyage (130, 230), dans lequel l'unité de nettoyage (130, 230) est adaptée pour initier ou effectuer une fonction d'activation de surface dans laquelle une réactivité chimique de la surface est accrue par dépôt de groupes chimiques fonctionnels sur la surface ;
l'application continue, dans une direction longitudinale du conducteur (15-1, 15-2, 15-3, 15-4), d'une composition du matériau thermodurcissable et d'éléments électriquement isolants solides, de préférence des plaquettes de mica, sur le conducteur, et l'activation continue, dans la direction longitudinale, d'un processus de durcissement du matériau thermodurcissable appliqué pour obtenir la couche d'isolation (20) sur le conducteur (15-1, 15-2, 15-3, 15-4) .

8. Procédé de la revendication 7, dans lequel les groupes chimiques fonctionnels sont produits au moyen d'un plasma.

9. Appareil (100, 200) de l'une quelconque des revendications 1 à 6 ou procédé de l'une quelconque des revendications 7 et 8, dans lesquels le conducteur (15-1, 15-2, 15-3, 15-4) comprend de multiples parties de conducteur ayant chacune une surface externe, les multiples parties de conducteur étant disposées au voisinage les unes des autres dans une direction longitudinale, moyennant quoi un espace (G) est formé entre chacune des surfaces externes adjacentes, la couche d'isolation étant également obtenue dans l'espace (G).

10. Appareil (100, 200) de l'une quelconque des revendications 1 à 6 ou 9 ou procédé de l'une quelconque des revendications 7 et 8 ou 9, dans lesquels les éléments électriquement isolants solides sont des plaquettes de mica, la relation entre les plaquettes de mica et le matériau thermodurcissable du matériau d'isolation se situant entre 20:80, de préférence entre 25:75, et habituellement environ 30:70 en volume dans l'état non durci.

11. Appareil (100, 200) de l'une quelconque des revendications 1 à 6 ou 9 et 10 ou procédé de l'une quelconque des revendications 7 et 8 ou 9 et 10, dans lesquels le conducteur (15-1, 15-2, 15-3, 15-4) est n'importe quel élément parmi un fil de bobinage, une barre Roebel, un enroulement statorique, ou une combinaison de ceux-ci.

12. Appareil (100, 200) de l'une quelconque des revendications 1 à 6 ou 9 à 11 ou procédé de l'une quelconque des revendications 7 et 8 ou 9 à 11, dans lesquels le conducteur (15-1, 15-2, 15-3, 15-4) est un conducteur émaillé.

13. Appareil (100, 200) de l'une quelconque des revendications 1 à 6 ou 9 à 12 ou procédé de l'une quelconque des revendications 7 et 8 ou 9 à 12, dans lesquels l'agencement de conducteur (10) est configuré pour être utilisé dans un moteur électrique, un générateur, ou un transformateur.

14. Appareil (100, 200) de l'une quelconque des revendications 1 à 6 ou 9 à 13 ou procédé de l'une quelconque des revendications 7 et 8 ou 9 à 13, dans lesquels le matériau thermodurcissable est un matériau de faible viscosité.

15. Pièce de machine électrique, en particulier stator d'une machine électrique, ayant un agencement de conducteur (10) obtenu au moyen de l'appareil de l'une quelconque des revendications 1 à 6 ou 9 à 14 ou pouvant être obtenu au moyen du procédé de l'une quelconque des revendications 7 et 8 ou 9 à 14.
